# EUROPEAN PATENT APPLICATION

(11) **EP 0 997 344 A2**
(43) Date of publication of application: **03.05.2000**
(21) Application number: 99830311.9
(22) Date of filing: 21.05.1999
(51) Int. Cl.: B60Q 1/54

(54) **A device displaying the speed of a vehicle, moment by moment, in such a manner as to be visible from the outside**

(30) Priority: 28.10.1998 IT RM980678
(71) Applicant: Antonelli, Pierluigi, 00164 Roma (IT)
(72) Inventor: Antonelli, Pierluigi, 00164 Roma (IT)
(74) Representative: Sneider, Massimo

(57) **Abstract**

This invention relates to a device displaying the speed of a vehicle, moment by moment, and installed, for example, in the inside of the vehicle on the rear window, or on the outside, next to the number plate, or in any other position .

## Description

### Technical field

This invention relates to a device displaying the speed of a vehicle, moment by moment, and installed, for example, in the inside of the vehicle on the rear window, or on the outside, next to the number plate, or in any other position.

### Background

It is a well known fact that speeding, whether of cars, motorcycles, mopeds or lorries and their trailers, is one of the principle causes of road accidents, and that the higher the speed, the more serious the consequences for the vehicles and the passengers. It is also well known that, for a long time now, in almost all the countries worldwide, speed limits have been introduced, whose violation is heavily fined and, in the more serious cases, punished by the withdrawal of the driver's license.

However, detecting the speed of a moving vehicle from outside the vehicle itself poses a number of problems. Currently, the speed of vehicles is detected by means of sophisticated devices set up by the police on the verge of the road, and the accuracy of whose readings are often contested by the drivers, who may see the device from afar and slow down in time, thus escaping any kind of detection. At times, they may brake suddenly, as soon as they notice the device and the police, thus adding hazard to hazard. Therefore, the need is strongly felt to monitor and unquestionably record the actual speed of a vehicle with greater ease, without having to set up sophisticated equipment; furthermore, it is necessary to "oblige" drivers to drive safely by complying with the speed limits, for their own sake and for that of others.

### Essential technical features

This invention relates to a speed sensor and display, or a repeater of the vehicle's speedometer, which in the preferred embodiment is installed at the rear end of the vehicle, so that it may easily be viewed from the outside; in one of its embodiments, this device may consist of a liquid crystal display, suitably connected to the vehicle's speedometer or to a speed sensor, for displaying the vehicle's speed (in digits), moment by moment; the speedometer, and other related equipment, must be checked and sealed by the manufacturer of the vehicle or the installer of the device, and after any maintenance operations. The display shall be large enough to be easily viewed by a vehicle driving behind the controlled vehicle, or in front, if the display is installed at the front, at the prescribed safety distance.

This invention also relates to a device capable of transmitting the speed data, including the date and time, to an electronic memory, so that it may be retrieved in the event of an accident, or of simple controls by the police. Lastly, this invention relates to a device capable of highlighting when a vehicle approaches or exceeds a certain speed, by changing the brightness of the display and/or by means of light signals or alarms.

### Example

A specific embodiment of this invention will now be described by way of example, with reference to the accompanying drawings, in which:
Figure 1 shows a vehicle where the present invention has been installed at the rear window;
Figure 2 shows a vehicle where the present invention has been installed next to the number plate;
Figure 3 shows a vehicle where the present invention has been installed at the windshield;
Figure 4 shows a vehicle where the present invention has been installed on the roof;
Figure 5 shows the present invention installed on a moped;
Figure 6 shows a possible connection diagram.

Referring to the drawings, the device displaying the speed of the vehicle, moment by moment, comprises a speed sensor (1) and one or more displays (2,3,4,5,6,n).

According to the present invention a vehicle, which may be a car, a lorry, a motorcycle or a moped, on which has been installed with a device (1) for recording and displaying its speed, which speed may be recorded by any of the known means and mechanisms used in almost all motor vehicles; the recorded speed is then displayed on one or more displays (2,3,4,5,n), installed in the inside or on the outside of the vehicle, in such a position as to be easily seen and read from another vehicle driving behind or in front and by policemen standing on the verge of the road.

In one of the preferred embodiments, the display (2,3,4,5,n) consists of a glowing liquid crystal or LED display.

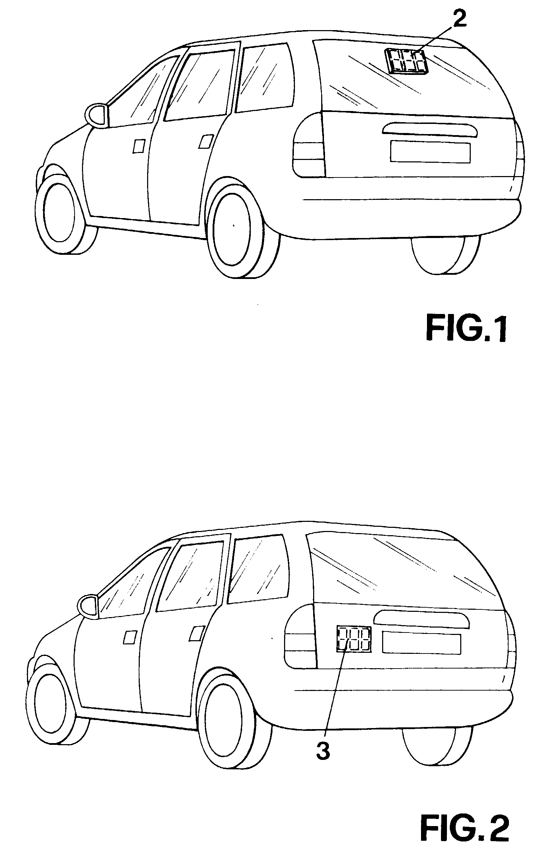

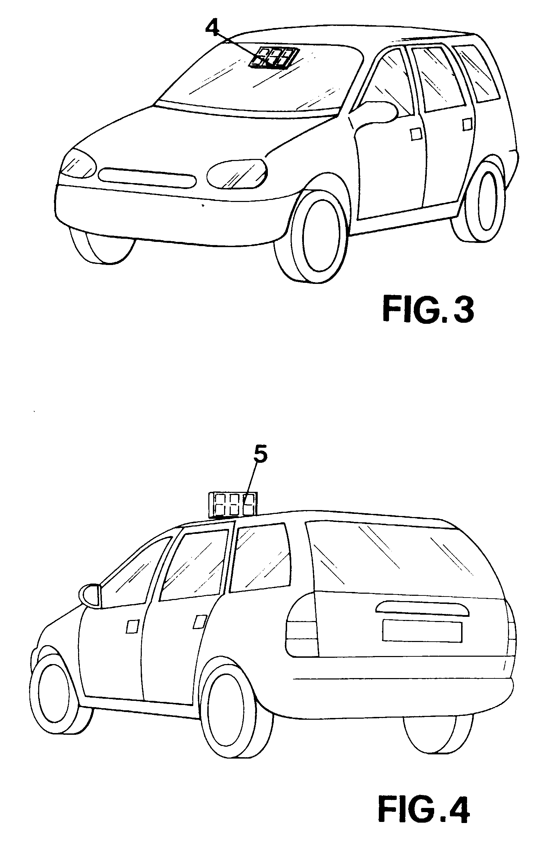

Figure 1 shows the speed display (2) installed at the rear window of the vehicle and consisting of a glowing liquid crystal display, large enough to be easily read and photographed from inside the vehicle behind; figure 2 shows an embodiment of the present invention where the display (3) is embedded in the rear of the vehicle, next to the number plate, for example; figure 3 shows the display (4) installed at the windshield, so that it may be easily read and photographed, if necessary, from a vehicle driving in front; figure 4 shows the display (5) installed on the roof of the vehicle and which may be seen from all four sides of the vehicle itself, according to its shape.

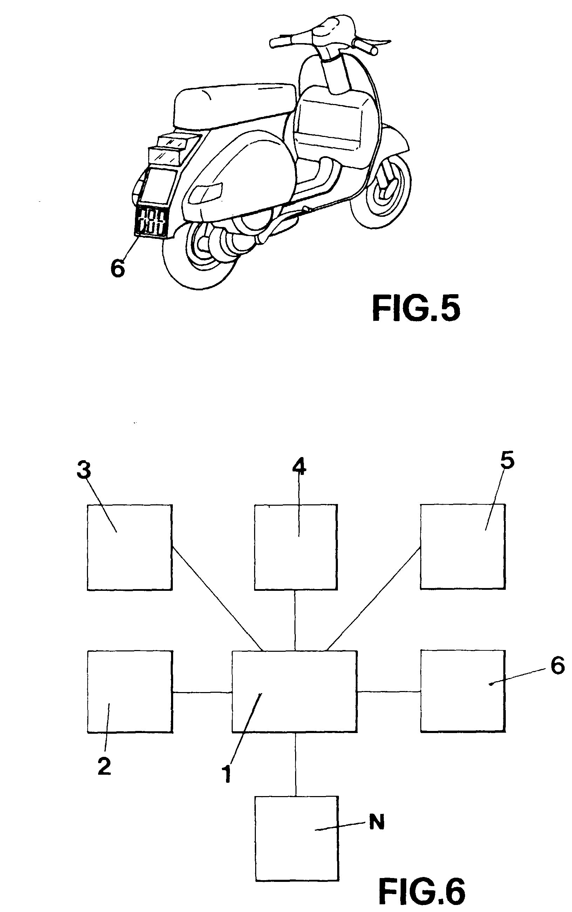

Figure 5 shows a display (6) installed on a moped.

As mentioned above, the device for recording the vehicle's speed and transmitting the recorded speed data to the display(s) may change, according to the vehicle on which it must be installed and to the cost of the display. But, of course, it may consist of the means commonly used to record the velocity of the vehicle, combined with any means for transmitting data to a display of any known type, including mechanical, radio and electronic means.

In another embodiment of the present invention, the brightness and colour of the display may be changed according to the visibility, and it may also be associated with an alarm activated when the vehicle approaches or exceeds the maximum prescribed speed on roads, highways or motorways, e.g. 130 km/h, which is the speed limit on Italian motorways, or any other speed; the display may also start flashing and set off an alarm which, obviously, must be different from that of police-cars or emergency vehicles. The present invention, besides allowing the police to immediately detect speeding vehicles, is also a deterrent for careless drivers, who realize that their speed may be easily seen by the other drivers and that the speed data is stored in the device and may be easily retrieved.

The preferred embodiments make mention of a luminous visual display, but this may also be replaced by other types of indicators, such as a dial speedometer with a pointer.

## Claims

1. A device displaying the speed of a vehicle, moment by moment, and visible from the outside, comprising a speed sensor and one or more displays connected to the speed sensor, wherein the displays are installed in such a manner as to be visible from the outside at a distance at least equal to the normal safety distance maintained by vehicles driving within the prescribed speed limits, which displays shall be such as to be visible in all driving and light conditions.

2. A device as claimed in Claim 1, wherein the display consists of a glowing liquid crystal or LED display.

3. A device as claimed in the preceding claims, wherein the display is installed at the vehicle's rear window, so as to be visible from the outside.

4. A device as claimed in the preceding claims, wherein the display is installed at the rear end of the vehicle.

5. A device as claimed in the preceding claims, wherein the display is installed at the front of the vehicle, so as to be visible from the outside through the windshield.

6. A device as claimed in the preceding claims, wherein the display is installed on the roof of the vehicle.

7. A device as claimed in the preceding claims, wherein the display is connected to a memory capable of storing the speeds, as well as the relevant dates and times, for retrieval by the police.

8. A device as claimed in the preceding claims, wherein the display, in particular, and the entire device, in general, are calibrated, test proven and stamped by the manufacturer of the vehicle or the installer of the device and repeated at each maintenance operation.

9. A device as claimed in the preceding claims, wherein the vehicle is also equipped with suitable light signals and/or alarms, on either the inside or the outside, to warn that the prescribed speed limit has been exceeded.
